# EUROPEAN PATENT APPLICATION

(11) **EP 4 704 026 A1**
(43) Date of publication of application: **04.03.2026**
(21) Application number: 25195863.3
(22) Date of filing: 14.08.2025
(51) Int. Cl.: G06T 5/50, G06T 11/00, G06T 12/30

(54) **TECHNIQUE FOR SPECTRAL MAP-BASED IMAGE GENERATION FROM ENERGY-RESOLVED MEDICAL IMAGING**

(30) Priority: 03.09.2024 DE 102024208328
(71) Applicant: Siemens Healthineers AG, 91301 Forchheim (DE)
(72) Inventor: BOHN, Lars, 91077 Neunkirchen am Brand (DE); DINGELDEY, Felix, 91056 Erlangen (DE); LAUGERETTE, Alexis, 91315 Höchstadt a. d. Aisch (DE); NOLTE, Björn, 90765 Fürth (DE)
(74) Representative: Siemens Healthineers Patent Attorneys

(57) **Abstract**

The invention relates to a technique for generating a medical image from a spectral map generated from raw multispectral medical imaging data acquired by means of an energy-resolved medical imaging technique. A computer-implemented method (100), performed by a computing device (200), comprises receiving (S102) raw multispectral medical imaging data, which were acquired by means of an energy-resolved medical imaging technique. A scope of analysis of the received (S102) raw multispectral medical imaging data is determined (S106). At least one spectral map is selected (S108). The selecting (S108) is based on the determined (S106) scope of analysis. The received (S102) raw multispectral medical imaging data are processed (S112) for generating (S114) at least one medical image based on the at least one generated (S110) spectral map.

## Description

The present invention relates to a technique for generating a medical image from a spectral map generated from raw multispectral medical imaging data acquired by means of an energy-resolved medical imaging technique, in particular comprising a method, a computing device, a system comprising the computing device, and a computer program product.

Photon-counting computed tomography (CT) is a form of CT, in which X-rays are detected using a photon-counting detector, which registers the interactions of individual photons. By keeping track of the deposited energy in each interaction, the detector pixels of the detector each record an approximate energy spectrum, making it a spectral or energy-resolved CT technique.

In the clinical use-case, photon-counting can offer major advantages. Compared with images from conventional CT scanners, clinical images generated using photon-counting detectors feature a high resolution and contrast improvements. The technology also paves the way for decisive further reductions in X-ray dose during CT scans. Imaging with photon-counting detectors therefore puts less strain on patients and offers physicians a genuine alternative when it comes to screening programs and follow-up examinations, for example in cancer treatment. Moreover, due to its inherently energy-resolved nature, multi-spectral CT data offers an additional dimension. It redefines clinical decision-making by providing all relevant CT results with one single scan.

However, in the clinical routine, that is, in routine reading of medical images, it becomes very challenging to unlock the full potential of multispectral images. This is because the additional dimension in the data also adds an additional dimension to the decision-making process of a clinician in the reading of multispectral medical images. The clinician conventionally has to select appropriate spectral ranges and apply the right image processing tools to be able to draw the correct conclusions. Missing out here conventionally may mean missing out on clinically relevant findings with potentially severe consequences for the patient.

It is therefore an object of the present invention to provide a solution for improving image generation based on raw multispectral medical imaging data, in particular in terms of higher resolution and/or improved contrast. Alternatively or in addition, an object of the present invention is to provide the clinician with credible assistance by automatedly processing multi-spectral image data for providing an improved medical diagnosis and/or for allowing for improved decision making in view of a potential treatment plan. Alternatively or in addition, an object of the present invention is to enable improvements in medical image acquisition (e.g., in view of a reduced acquisition time and/or need for only a single scan compared to conventional, e.g., pairwise, scans), reductions in radiation doses, and/or reductions in administering contrast agents, leading to a reduced health risk and/or strain for the patient.

This object is solved by a method for generating a medical image from a spectral map generated from raw multispectral medical imaging data acquired by means of an energy-resolved medical imaging technique, by a computing device, by a system, by a computer program (and/or computer program product), and a computer-readable storage medium according to the appended independent claims. Advantageous aspects, features and embodiments are described in the dependent claims and in the following description together with advantages.

In the following the solution according to the invention is described with respect to the claimed method for generating a medical image from a spectral map generated from raw multispectral medical imaging data acquired by means of an energy-resolved medical imaging technique as well as with respect to the claimed computing device. Features, advantages or alternative embodiments herein can be assigned to the other claimed objects (e.g., the system, the computer program or a computer program product) and vice versa. In other words, claims for the computing device and/or the system can be improved with features described or claimed in the context of the method. In this case, the functional features of the method are embodied by structural units of the system and vice versa, respectively.

As to a first aspect, a (in particular computer-implemented) method for generating a medical image from a spectral map generated from raw multispectral medical imaging data acquired by means of an energy-resolved medical imaging technique is provided. The method is performed by a computing device. The method comprises a step of receiving raw multispectral medical imaging data. The raw multispectral medical imaging data have been acquired by means of an energy-resolved medical imaging technique. The method further comprises a step of determining a scope of analysis of the received raw multispectral medical imaging data. The method further comprises a step of selecting at least one spectral map based on the determined scope of analysis. The method still further comprises a step of processing the received raw multispectral medical imaging data for generating at least one medical image based on the at least one selected spectral map. Alternatively or in addition, at least one medical image may be generated based on or using the at least one spectral map (e.g., by processing the at least one spectral map or by applying the at least one spectral map to the raw multispectral medical imaging data in the step of processing the same).

According to some examples, a plurality of spectral maps may be preconfigured and the step of selecting may comprise selecting the at least one spectral map from the plurality of preconfigured maps. Each spectral map from the plurality of spectral maps may be associated with a different scope of analysis. According to some examples, the step of selecting may comprise comparing the determined scope of analysis with the associated scopes of analysis of the preconfigured spectral maps.

According to some examples, the spectral maps may be generated from the raw multispectral medical imaging data.

By the inventive technique, raw multispectral medical imaging data acquired by means of a spectral and/or energy-resolved medical imaging technique can be automatically processed (and/or processed by computer-implementation). The resulting medical images have a higher resolution and/or improved contrast compared to conventional medical images acquired without energy-resolution. The acquisition of the raw multispectral medical imaging data has the advantage that all relevant data can be acquired in a single scan and/or with a reduced need for radiation, e.g., with an overall X-ray dose that is lower than conventionally.

According to some examples, a spectral map may correspond to a given spectral range. The inventive technique enables selecting a suitable spectral range for diagnosis and/or decision making, and/or selecting suitable image processing tools, in particular automatically and/or in a computer-implemented way.

The energy-resolved medical imaging technique may comprise (or may be) computed tomography (CT), in particular photon-counting CT. Alternatively or in addition, the energy-resolved medical imaging technique may comprise (or may be) magnetic resonance tomography (MRT), such as MRT with two or more different B0 fields or MRT with variable acquisition sequences with using different magnetic field strengths. Further alternatively or in addition, the energy-resolved medical imaging technique may comprise (or may be) energy-resolved neutron imaging (e.g., using the energy-resolved neutron imaging system RADEN as described in [8], which is included herein by reference). Still further alternatively or in addition, the energy-resolved medical imaging technique may comprise (or may be) dual-energy X-ray imaging, photon-counting X-ray imaging, phase-contrast X-ray imaging, and/or energy-resolved X-ray imaging (e.g., as described in [9], which is included herein by reference). X-ray imaging may also be denoted as (e.g., digital) radiography and/or may comprise (in particular two-dimensional, 2D) projection imaging. Any X-ray imaging technique may be similar to (and/or may use the same technique as) CT, but for conventional radiography, allowing the generation of several contrasts with one image acquisition only.

The energy-resolved medical imaging technique may alternatively or in addition comprise (or may be) photoacoustic imaging (also: optoacoustic imaging), which may be energy resolved in the sense that different wavelengths, e.g., energy levels of visible and/or near infrared light (e.g., provided by non-ionizing laser pulses), are used to acquire the medical imaging data.

The energy-resolved medical imaging technique may comprise a combination of two different energy-resolved medical imaging techniques, e.g., photon-counting CT and (in particular energy-resolved) MRT.

The raw multispectral medical imaging data may pertain to a patient and/or a (in particular living) individual, a human and/or an animal.

The raw multispectral medical imaging data may, e.g., comprise an amount of energy deposition per unit area, such as for single-photon CT. The energy deposition may correspond to the energy of a single photon (and/or a single neutron), which is proportional to its wavelength (and/or "spectral" colour). The amount of energy deposition may be measured exactly, or per predetermined energy bin. The unit area may be a pixel of the (e.g., X-ray) detector.

The raw multispectral medical imaging data may be captured by using multispectral imaging capturing data at different wavelengths, each of which interacts differently with biological tissues. For instance, different wavelengths can penetrate tissues to varying depths, revealing details that may not be visible at other wavelengths.

The raw multispectral medical imaging data may, e.g., comprise k-space data acquired by means of an MRT scanner.

By the spectral data, tissue types may be distinguished based on their specific energy absorption characteristics (in particular for CT) and/or based on their specific Larmor frequency (in particular for MRT).

The scope of analysis of the received raw multispectral medical imaging data may comprise a dataset (or may be comprised in a dataset), indicating a medical use case and/or a reason why the medical imaging was performed, such as a dataset indicating an anatomical structure and/or a region of interest (Rol) to be imaged, for example in view of a potential diagnosis and/or in view of symptoms described by a patient. According to some examples, the analysis may happen at the computing device and/or involve the inspection of the medical image by a user. In particular, the medical image may be conceived as being prepared for an inspection by the user according to the scope of the analysis. According to some examples, the scope of analysis may comprise a text string or any other identifier, such as a computer readable code or number, e.g., identifying a medical use case and/or reason for exam and/or medical procedure and/or medical question or task. According to some examples, the scope of analysis may comprise an ICD code. Thereby, ICD stands for International Classification of Diseases. The International Classification of Diseases is a globally used medical classification used in epidemiology, health management and for clinical purposes, maintained by the WHO.

The at least one spectral map (briefly also: map) may comprise a predetermined functional dependence of the resolved energy and/or spectrum per unit area or unit volume (e.g., per pixel or per voxel). Each spectral map may comprise a different predetermined functional dependence. Thus, a spectral map may be seen as transfer function configured to map raw multispectral medical imaging data to a representation or medical image data of the multispectral medical imaging data of a predefined spectral range. According to some examples, the representation or medical image may be mono-spectral or monoenergetic at a pre-defined mono-spectral and/or mono-energy (keV) level. That way, the spectral map may also be conceived as a selective spectral filter of the raw multispectral medical imaging data.

According to some examples, the spectral mal may comprise a virtual representation or image of the raw multispectral medical imaging data at a predefined spectral/energy range or level. According to some examples, the virtual representation or image of the multispectral medical imaging data may be generated by applying the functional dependence or transfer function to the raw multispectral medical imaging data.

For raw multispectral medical imaging data by means of CT, a spectral map may, e.g., comprise a virtual monoenergetic image at a predefined mono-energy (keV) level, an iodine map, an effective atomic number map, a virtual unenhanced map, and/or a virtual non-contrast map, as further described in [1], [2], [3], [4], all of which are included herein by reference.

For raw multispectral medical imaging data by means of MRT, a spectral map may, e.g., comprise a (e.g., magnitude-based or complex-based) proton density fat-fraction (FF) map, a B0 map, an R2* map (e.g., from short-TE train or from all echoes with FF compensation), an unwrapped phase map, a susceptibility weighted imaging (SWI) map, a local frequency shift (LFS) map, a quantitative susceptibility mapping (QSM) map, a contrast map, a T1 relaxation time map, aT2 relaxation time map, and/or a T2p map, as further described in [5], [6], [7], all of which are included herein by reference.

The selection of at least one spectral map may depend on a medical use case (e.g., as the scope of analysis). For example, an iodine map of raw multispectral CT data may be suitable for myocardial perfusion, pulmonary embolism, and/or pulmonary vein imaging. As a further example, a lesion in a pancreatic body may be advantageously visualized in a 50 keV monoenergetic image, an iodine concentration overlay map, and/or an effective atomic number map. As a further example, a kidney stone may be best characterized by an effective atomic number map.

According to some examples, the method may further comprise generating the at least one spectral map according to the selected spectral map.

The generating of the at least one spectral map may comprise applying the predetermined functional dependence of the resolved energy and/or spectrum per unit area or unit volume (e.g., per pixel or per voxel) to the raw multispectral medical imaging data.

The result, i.e., the spectral map, may be a virtual representation of the raw multispectral medical imaging data in a predefined spectral range or level (which representation still needs to be processed/converted/rendered to obtain the medical image).

The processing may comprise converting the at least one spectral map into at least one medical image (briefly also: image). The at least one medical image may be a volumetric image (also: three-dimensional, 3D, image) or a planar image (also: two-dimensional, 2D, image). The planar image may, e.g., be associated with a slice of a volumetric medical imaging dataset comprising the raw multispectral medical imaging data.

The generated medical image may be provided for rendering, e.g., on a screen, on a head-mounted display (HMD), and/or on an extended reality (XR) headset. The screen may be screen (e.g., a touchscreen) of a computing device, such as a PC, a mobile device and/or a tablet.

The raw multispectral medical imaging data may comprise a time series. In this case, the medical image may comprise a time series as well (e.g., a video sequence).

Alternatively or in addition, there exist various CT methods for acquiring multispectral imaging data, such as dual energy CT and/or photon-counting CT.

There exist various MRT methods for acquiring multispectral imaging data, such as using two different magnets to perform successive measurements with two different B0-field values and/or applying specifically designed excitation pulse sequences.

Each of the energy-resolved medical imaging techniques can provide data that are improved, e.g., due to the patient naturally remaining in the same position, as opposed to performing conventionally two different measurements. Moreover, less contrast agents may be dispensed and a radiation dose that the patient is subjected to may be reduced, which benefits the patient's health.

The method may further comprise a step of determining a spectral range, a body part and/or at least one Rol of the received raw multispectral medical imaging data. Optionally, the determining may be based on metadata of the received raw multispectral medical imaging data. Alternatively or in addition, the determining may be based on voxel data, or pixel data, of the received raw multispectral medical imaging data. The determining may in particular be based on a machine-learned function.

Alternatively or in addition, the method may comprise a step of receiving a user input indicative of a spectral range, a body part, and/or at least one Rol, of the received raw multispectral medical imaging data.

According to some examples, the step of selecting may comprise selecting the spectral map according to the spectral range. According to some examples, the step of generating may comprise generating the spectral map based on the spectral range.

Determining the scope of analysis may be based on the spectral range, the imaged body part, and/or at least one Rol. The corresponding data may be determined automatically and/or by a computing device (e.g., the computing device performing the method). Such a determining may be based on metadata of the raw multispectral medical imaging data (e.g., a DICOM-header), and/or it may be based on an analysis of the semantic content, in particular by applying a machine-learned function to the raw multispectral medical imaging data. Thereby, the method may be (e.g., completely or at least predominantly) computer-implemented.

Determining the body part and/or the Rol may be performed by means of an anatomy aware algorithm. An anatomy-aware algorithm may be an algorithm designed with a deep understanding of (in particular human) anatomy, allowing it to analyze, process, or predict medical data in a way that aligns with anatomical structures and relationships.

The at least one Rol may be voxel-based or pixel-based. Alternatively or in addition, the at least one Rol may have a predetermined geometric shape, e.g., according to a bounding box, a rectangle, a circle, an ellipse, a cube, and/or a sphere.

The scope of analysis may be based on a user input. E.g., the body part and/or at least one Rol, to which the raw multispectral medical imaging data relate, may be provided by the user input. This can enable the user (e.g., a medical practitioner) to provide a scope that deviates from the content provided by the metadata.

The user input may be received by means of a user interface (UI), e.g., a graphical user interface (GUI). The UI (and/or GUI) may comprise a computer mouse, a joystick, a touchpad, a keyboard, a touchscreen, and/or a microphone (in particular for receiving audio user input and/or verbal instructions for modifying the rendering).

Determining the scope of analysis may comprise analysing metadata in relation to the raw multispectral medical imaging data, in particular from a worklist, from a scheduling system, from a scan protocol, from an electronic medical record (EMR) database (also: electronic health record, EHR, database), from demographic data and/or from (and/or in relation to) a disease or patient history, in particular of the patient (and/or individual) to whom the raw multispectral medical imaging data pertain. For example, information about the clinical indication (and/or reason for examination; also: reason for the acquisition of the raw multispectral medical imaging data) or about findings reported in prior examinations (briefly: exams) may be used.

Alternatively or in addition, determining the scope of analysis may comprise using the determined spectral range, the received spectral range, the determined body part, the received body part, the determined at least one Rol, and/or the received at least one Rol.

Alternatively or in addition, determining the scope of analysis may comprise executing a large language model (LLM).

Determining the scope of analysis may be based on DICOM-headers or any other type of metadata saved in relation to the raw multispectral medical imaging data.

The metadata may be semantically analysed using the LLM. Thereby, the computer-implementation of the method may be improved.

The method may further comprise a step of providing the generated at least one medical image for rendering.

The rendering may be performed by means of a screen, such as a computer screen in a doctor's office or a screen in an operating theatre. Alternatively or in addition, the rendering may be performed using an XR headset or a HMD. The screen may be screen (e.g., a touchscreen) of a computing device, such as a PC, a mobile device and/or a tablet.

The rendering may comprise cinematic rendering. Cinematic rendering may comprise an image processing technique applied in medical diagnostics to create in particular three-dimensional (3D), photorealistic images of cross-sectional data, such as from CT or MRT.

Based on a volumetric Monte-Carlo Path Tracing algorithm, cinematic rendering may trace hundreds to thousands of light paths per voxel, or per pixel, through the data generated by a virtual camera. The light input may be averaged along these paths and transported from high-dynamic-range images back to the virtual camera sensor. The scattering, absorption and emission may then be simulated along the optical paths by means of the interaction between the light and the volumetric data, resulting in vivid, realistic anatomical images of similar image quality similar to computer generated imagery (CGI) sequences used in the film industry.

Approved for use in the medical field, cinematic rendering may be applied to a range of different areas that include radiology (to supplement available cross-sectional images), surgery (to plan preoperative procedures, such as oral and maxillofacial surgery, trauma surgery and orthopedics), as well as cardiovascular surgery and interventional radiology. Cinematic rendering can also be used across disciplines to, for example, train post-graduate medical personnel, as well as support patient education and interdisciplinary clinical meetings (such as tumor boards).

The method may comprise a step of receiving a user input indicative of a request to modify the rendering. The method may further comprise a step of changing at least one rendering parameter based on the received user input. The method may further comprise a step of providing the at least one medical image with at least one rendering parameter that has been changed for further rendering.

The rendering may be optimized, in particular interactively, for the scope of analysis based on the received user input.

The user input may comprise hoovering (e.g., over a Rol and/or a collection of pixels), zooming in or out, scrolling, performing a virtual reality (VR) rotation and/or performing a (in particular three-dimensional, 3D) flip. Alternatively or in addition, the user input may be indicative of introducing (and/or changing) a cut plane, and/or introducing (and/or changing) a split plane.

According to some examples, the rendering comprises providing a plurality of different rendering functions for rendering a medical image, selecting at least one rendering function from the plurality of different rendering functions based on the selected spectral map, and applying the selected at least one rendering function to the raw multispectral medical imaging data and/or or the spectral map for generating the at least one medica image.

The plurality of different rendering functions may respectively comprise a different transfer function for mapping raw imaging data or processed raw imaging data (which has been processed by applying the spectral map or which is the spectral map) to a two-dimensional image for displaying to a user. According to some examples, each transfer function may be associated to a particular one of the spectral maps or ranges. According to some examples each transfer function maps raw imaging data differently for different spectral ranges. With that, a rendering can be provided to the user which is suited for the spectral map / range.

According to some examples, the step of selecting the at least one spectral map comprises selecting a first spectral map and a second spectral map different from the first spectral map, the step selecting at least one rendering function comprises selecting a first rendering function based on the first spectral map and a second rendering function different from the first rendering function based on the second spectral map, and the step of applying the at least one rendering function comprises applying the first and the second rendering function to the raw multispectral medical imaging data and/or or the first/second spectral map for generating the at least one medica image.

Thereby, the step of applying may comprise applying the first rendering function to a first portion of the raw multispectral medical imaging data and/or or the first spectral map and the second rendering function to a second portion of the raw multispectral medical imaging data and/or or the second spectral map different from the first portion. According to some examples, the first portion may relate to a region of interest in the raw multispectral medical imaging data and/or or the first/second spectral map which may have been detected by the user or a detection tool. In particular, this may relate to a lesion visible in the raw multispectral medical imaging data and/or or the first/second spectral map.

Further, the step of applying may comprise rendering a first medical image with the first rendering function and a second medical with the second rendering function and merging and/or blending and/or overlaying the first and the second medical image so as to generate the at least one medical image.

That way, a medical image may be provided in which regions of interest are highlighted by way of basing their representation on a distinct spectral map.

Providing the medical image for rendering may comprise determining a hanging protocol and/or a reporting template.

Specifically, determining the hanging protocol may be based on the selected spectral map. Thereby, a plurality of preconfigured hanging protocols may be provided, wherein each of the plurality of preconfigured hanging protocols is associated with a spectral map and/or range, and the hanging protocol may be determined by selecting the determined hanging protocol from the plurality of hanging protocols based on the selected spectral maps. Specifically, the hanging protocol may be selected which fits the selected spectral map.

A hanging protocol may comprise a layout for a graphical user interface configured to present medical information and, in particular, one or more medical images to the user. With that, a layout can be determined which fits the spectral map.

According to further examples, the hanging protocol may be identified based on the scope of analysis (or may be or may be comprised in the scope of analysis) and indicate/require the usage of one or more spectral. For instance, a hanging protocol may set out having a medical image generated with a first spectral map and another image generated with a second spectral map different from the first spectral map.

Accordingly, the method may comprise determining a hanging protocol based on the scope of analysis and selecting the at least one spectral map based on the hanging protocol, wherein the hanging protocol indicates the at least one spectral map.

The hanging protocol and/or the reporting template may further facilitate the efficient workflow for the user (e.g., the medical practitioner), e.g., by selecting a hanging protocol and/or reporting template suitable for the scope of analysis.

Selecting the at least one spectral map to be generated may be based on a predefined configurable set of spectral maps. Alternatively or in addition, selecting the at least one spectral map to be generated may be rule-based, and/or based on a learned function.

Selecting the at least one spectral map to be generated may comprise selecting two or more spectral maps. The processing and/or generating of the at least one medical image (also: medical view) may comprise generating, e.g., one medical image associated with each spectral map, and/or generating a combination of the two or more spectral maps. Alternatively or in addition, the processing and/or generating of the at least one medical image may be based on the combination of the two or more spectral maps. Alternatively or in addition at least one combination image may be generated, e.g., with one part based on a first spectral map and another part based on a second map.

Selecting the at least one spectral map to be generated may comprise performing a segmentation on at least one of the at least one selected spectral map (e.g., on a first selected spectral map among two or more spectral maps).

A set of spectral maps may be predefined, from which one or more spectral maps for the scope of analysis may be selected.

The selecting may follow predefined rules, and/or may be computer-implemented based on a learned function, which may be trained based on historical data.

Two or more spectral maps can advantageously be used to distinguish between different diagnostic results. E.g., a lesion may be unequivocally identified by the selected combination of spectral maps, where the associated region in the medical image is conspicuous.

The rendering may be based on selecting at least one rendering parameter from a predefined configurable set of rendering parameters. Optionally, the selecting of the at least one rendering parameter may be based on the determined scope of analysis.

The rendering parameter may comprise a camera view, a cutting plane, a crop box, one or more sampling parameters, one or more interpolation parameters, one or more transfer functions for value to color and/or alpha mapping, color palettes, a material, a lighting, a depth value, an opacity, and/or texture coordinates, e.g., per voxel, or per pixel.

The processing may comprise selecting one or more (e.g., pre-processing, processing, and/or post-processing) tools from a predetermined set of (e.g., pre-processing, processing, and/or post-processing) tools based on the spectral map. The tools may have the ability to run completely autonomously and/or automatically.

According to some examples, each spectral map (of the plurality of preconfigured spectral maps) may be associated with one or more of the tools. By selecting the tools based on (or according to) the selected spectral map, those tools can be selected which are compatible with the respective map / spectral range.

The (e.g., pre-processing, processing, and/or post-processing) tool may, e.g., be a segmentation tool, a measurement tool, a reconstruction tool, and/or a visualisation relevant tool like masking through a segmentation.

The method may further comprise a step of providing a list of one or more (e.g., pre-processing, processing, and/or post-processing) tools. Alternatively or in addition, the method may further comprise a step of receiving a user input indicative of a selection of one or more (e.g., pre-processing, processing, and/or post-processing) tools.

The selecting of the (e.g., pre-processing, processing tools and/or post-processing) may in one embodiment be performed by a user (e.g., a medical practitioner) based on the scope of analysis.

In other embodiments, the selecting of the (e.g., pre-processing, processing, and/or post-processing) tools may be performed by the computing device.

According to some examples, the scope of analysis comprises obtaining a first predefined measurement parameter and a second predefined measurement parameter different from the first predefined measurement parameter, the step of selecting the at least one spectral map comprises selecting a first spectral map and a second spectral map different from the first spectral map, the method further comprises determining the first predefined measurement parameter based on the first spectral map and determining the second predefined measurement parameter based on the second spectral map. Further, the method may comprise providing the first and second predefined measurement parameters, preferably to a user and/or together with or in the at least one medical image. According to some examples, in the step of processing, a first medical image is generated based on the first spectral map and a second medical image is generated based on the second spectral map (from the raw multispectral medical imaging data, respectively) and first and second predefined measurement parameters are provided in both the first and second medical images. That way, a user can efficiently review the processing results.

The first and second predefined measurement parameters may be required to provide a certain clinical information or medical diagnosis as part of the scope of analysis. According to some examples, the first and second measurement parameters may be indicated by the scope of analysis. According, first and second measurement parameters may be obtained (or determined) bases on the scope of analysis. According to some examples, first and second predefined measurement parameters may be complementary measurement parameters. According to some examples, the first and second predefined measurement parameters may respectively relate to or are compatible with different spectral ranges or maps and/or can only be provided in the corresponding spectral range or map. According to some examples, the first measurement parameter may relate to an existence of a predetermined region of interest in the raw multispectral medical imaging data. According to some examples, the second measurement parameter may relate to one or more properties of the predetermined region of interest (as reflected in the raw multispectral medical imaging data). According to some examples, the region of interest may relate to a lesion in a body part of the patient.

The first spectral map may be selected (and/or generated) according to the first predefined measurement parameter. In particular, the first spectral map may be selected (and/or generated) so as to enable determining the first predefined measurement parameter from the raw multispectral medical imaging data. The second spectral map may be selected (and/or generated) according to the second predefined measurement parameter. In particular, the second spectral map may be selected (and/or generated) so as to enable determining the second predefined measurement parameter from the raw multispectral medical imaging data.

According to some examples, determining the first predefined measurement parameter may comprise processing the raw multispectral medical imaging data based on the first spectral map so as to generate a first mapping result and determining the first predefined measurement parameter based on the first mapping result. According to some examples, this may involve applying a first, in particular pre-processing, processing and/or post-processing, tool to the first mapping result. Further, determining the second predefined measurement parameter may comprise processing the raw multispectral medical imaging data based on the second spectral map so as to generate a second mapping result and determining the second predefined measurement parameter based on the second mapping result. According to some examples, this may involve applying a second, in particular pre-processing, processing and/or post-processing, tool different to the first tool to the second mapping result.

According to some examples, the first tool may be selected from a predetermined set of, in particular pre-processing, processing and/or post-processing, tools based on the first spectral map and/or the first predetermined measurement parameter and the second tool may be selected from the predetermined set of tools based on the second spectral map and/or the second predetermined measurement parameter.

The method may further comprise a step of receiving prior image data (briefly also: prior image(s)) and the step of selecting comprises selecting the at least one spectral map based on the prior image data.

The prior image data may comprise be prior (raw) multispectral medical imaging data or non-multispectral medical imaging data. Further, the prior image data may comprise one or more prior spectral maps and/or one or more medical images which may include rendered medical images.

According to some examples, the step of selecting may comprise analysing the spectral properties of the prior image data so as to provide a prior spectral information and selecting the at least one spectral map based on the prior spectral information. The prior spectral information may comprise any one of a spectral range, spectral map, spectral level, energy level or energy level.

With that, the spectral map can be selected so as to allow for a comparison of the processed raw multispectral medical imaging data with the prior image data (in additional consideration of the scope of analysis). In particular, a comparison may comprise registering the prior image data with the generated at least one spectral map, and/or registering the prior image data with the generated at least one medical image.

The method may further comprise a step of registering the prior image data with the generated at least one spectral map, and/or registering the prior image data with the generated at least one medical image. Optionally, the registering may comprise performing an optimization process. In particular, registering may comprise selecting the at least one rendering parameter for lowest uncertainty.

Using the registered prior image data, a progression of a patient's health state may be computed and verified.

The prior image data may be received before the processing of the raw multispectral medical imaging data (and/or before the processing of the at least one generated spectral map), e.g., on demand if the computing device (in particular automatically) and/or the user deems these to be necessary. Prior image data or prior results (e.g., extracted from these images) may alternatively or in addition have been stored for this purpose exactly.

In CT and/or MRT, (in particular image) voxels may (e.g., always) be the interesting part and/or relevant fundamental unit of the (e.g., raw multispectral) medical imaging data (e.g., for a Rol and/or as compared to pixels). E.g., CT slices comprise voxels because they represent a "true slice" of a given thickness of the body (briefly also: slice thickness). Pixels are used, e.g., in CT to describe the signals measured at the detector (in particular basically in single projections). Pixels may alternatively or in addition be relevant (in particular as the fundamental unit of the, e.g., raw multispectral, medical imaging data) for, e.g., X-ray imaging.

As to a device aspect, a computing device for generating a medical image from a spectral map generated from raw multispectral medical imaging data acquired by means of an energy-resolved medical imaging technique is provided. The computing device comprises a raw multispectral medical imaging data reception interface configured for receiving raw multispectral medical imaging data, which were acquired by means of an energy-resolved medical imaging technique. The computing device further comprises a determination module configured for determining a scope of analysis of the received raw multispectral medical imaging data. The computing device further comprises a selection module configured for selecting at least one spectral map. The selecting is based on the determined scope of analysis. The computing device still further comprises a processing module configured for processing the received raw multispectral medical imaging data for generating at least one medical image based on the at least one generated spectral map. Alternatively or in addition, the processing module may be configured for generating that at least one medical image from the at least one generated spectral map (e.g., by processing the at least one generated spectral map).

According to some examples, the computing device further comprises a generating module configured for generating the at least one selected spectral map from the raw multispectral medical imaging data.

The generating of the at least one medical image based on the at least one generated spectral map may be performed by a medical image generating module. Alternatively or in addition, the medical image generating module may be a sub-module of the processing module.

The computing device may be configured to perform any one of the steps, and/or comprise any one of the features, disclosed within the context of the method according to the method aspect.

As to a system aspect, a system for generating a medical image from a spectral map generated from raw multispectral medical imaging data acquired by means of an energy-resolved medical imaging technique is provided. The system comprises at least one medical scanner, which is configured for acquiring raw multispectral medical imaging data. The system further comprises a computing device according to the device aspect. The raw multispectral medical imaging data reception interface of the computing device is configured for receiving the raw multispectral medical imaging data from the at least one medical scanner. The system further comprises a display device (e.g., a computer screen), which is configured for rendering the generated at least one medical image.

As to a further aspect, a computer program product is provided comprising program elements which induce a computing device to carry out the steps of the method for generating a medical image from a spectral map generated from raw multispectral medical imaging data acquired by means of an energy-resolved medical imaging technique according to the method aspect, when the program elements are loaded into a memory of the computing device.

As to a still further aspect, a computer-readable medium is provided, on which program elements are stored that can be read and executed by a computing device, in order to perform steps of the method for generating a medical image from a spectral map generated from raw multispectral medical imaging data acquired by means of an energy-resolved medical imaging technique according to the method aspect, when the program elements are executed by the computing device.

The properties, features and advantages of this invention described above, as well as the manner they are achieved, become clearer and more understandable in the light of the following description and embodiments, which will be described in more detail in the context of the drawings.

This following description does not limit the invention on the contained embodiments. Same components or parts can be labelled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.
- Fig. 1: is a flow chart of a method for generating a medical image from a spectral map generated from raw multispectral medical imaging data acquired by means of an energy-resolved medical imaging technique according to a preferred embodiment of the present invention; and
- Fig. 2: is an overview of the structure and architecture of a computing device for generating a medical image from a spectral map generated from raw multispectral medical imaging data acquired by means of an energy-resolved medical imaging technique according to a preferred embodiment of the present invention.

Any reference signs in the claims should not be construed as limiting the scope.

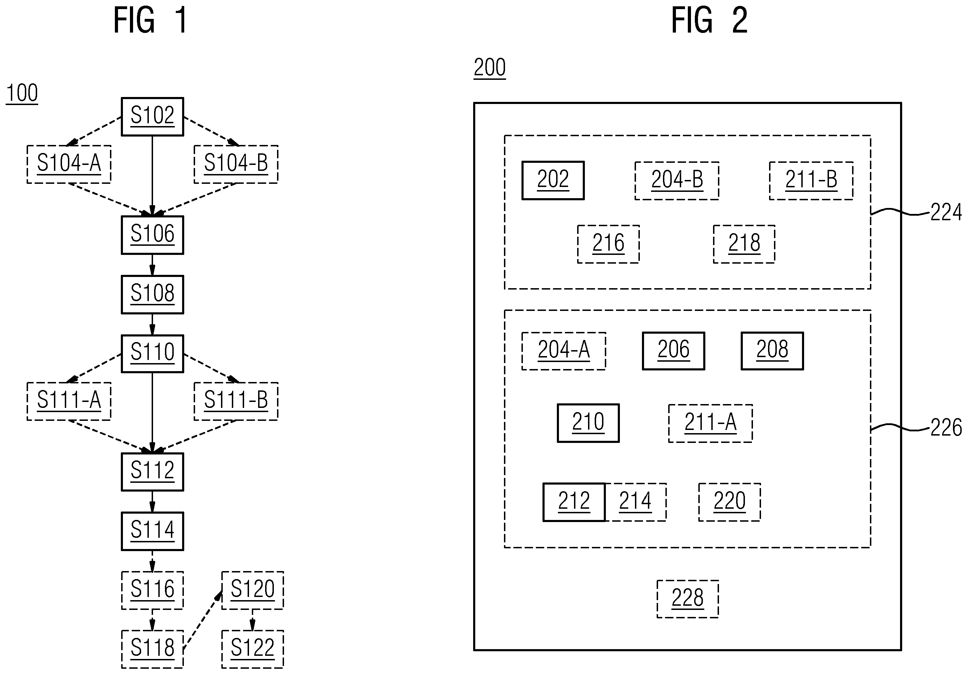

Fig. 1 schematically illustrates an exemplary flowchart for a computer-implemented method 100 for generating a medical image from a spectral map generated from raw multispectral medical imaging data acquired by means of an energy-resolved medical imaging technique.

The method 100 comprises a step S102 of receiving raw multispectral medical imaging data, which have been acquired by means of an energy-resolved medical imaging technique.

The method 100 further comprises a step S106 of determining a scope of analysis of the received S102 raw multispectral medical imaging data. The scope of analysis may be calculated from metadata of or associated to the raw multispectral medical imaging data, e.g. comprised in a DICOM header.

The method 100 further comprises a step S108 of selecting at least one spectral map to be generated from the received S102 raw multispectral medical imaging data. The selecting S108 is based on the determined S106 scope of analysis.

The method 100 further comprises a step S110 of generating the at least one selected S108 spectral map.

The method 100 still further comprises a step S112 of processing the received S102 raw multispectral medical imaging data for generating S114 at least one medical image based on the at least one generated S110 spectral map. In an alternative embodiment, the at least one medical image may be generated S114 by processing the generated S110 at least one spectral map.

Optionally, the method 100 may comprise a step S104-A of determining a spectral range, a body part and/or a region of interest (Rol) of the received S102 raw multispectral medical imaging data. Optionally, the determining S104-A may be based on metadata of the received S102 raw multispectral medical imaging data. Alternatively or in addition, the determining S104-A may be based on voxel data, or pixel data, of the received S102 raw multispectral medical imaging data. The determining S104-A may in particular be based on a machine-learned function.

Alternatively or in addition, the method 100 may comprise a step S104-B of receiving a user input indicative of a spectral range, a body part, and/or a Rol, of the received S102 raw multispectral medical imaging data.

The method 100 may comprise a step S111-A of providing a list of one or more processing (and/or pre-processing, and/or post-processing) tools. Alternatively or in addition, the method 100 may comprise a step S111-B of receiving a user input indicative of a selection of one or more processing (and/or pre-processing, and/or post-processing) tools.

The method 100 may comprise a step S116 of providing the generated S114 at least one medical image for rendering.

The method 100 may comprise a step S118 of receiving a user input indicative of a request to modify the rendering. The method 100 may further comprise a step S120 of changing at least one rendering parameter based on the received S118 user input. The method 100 may still further comprise a step S122 of providing the at least one medical image with at least one rendering parameter that has been changed S120 for further rendering.

The method 100 may comprise a step (not shown in Fig. 1) of receiving prior image data. The method 100 may further comprise a step (also not shown in Fig. 1) of registering the prior image data with the generated S110 at least one spectral map, and/or registering the prior image data with the generated S114 at least one medical image. Optionally, the registering may comprise performing an optimization process. In particular, registering may comprise selecting the at least one rendering parameter for lowest uncertainty.

The prior image data may be received before the step S112 of processing the received S102 raw multispectral medical imaging data. Alternatively or in addition, the prior image data may be received at the latest between the processing step 112 and the step 114 of generating at least one medical image. In a first exemplary embodiment, the prior image data may, e.g., be fetched on-demand latest before the step 114. In a second exemplary embodiment, the prior image data may alternatively or in addition have been stored and therefore be available at any time of performing the method 100.

The method 100 may be performed by the computing device 200 of the following Fig. 2.

Fig. 2 schematically illustrates an exemplary architecture of a computing device 200 for generating a medical image from a spectral map generated from raw multispectral medical imaging data acquired by means of an energy-resolved medical imaging technique.

The computing device 200 comprises a raw multispectral medical imaging data reception interface 202 configured for receiving raw multispectral medical imaging data. The raw multispectral medical imaging data were acquired by means of an energy-resolved medical imaging technique.

The computing device 200 further comprises a determination module 206 configured for determining a scope of analysis of the received raw multispectral medical imaging data.

The computing device 200 further comprises a selection module 208 configured for selecting at least one spectral map to be generated from the received raw multispectral medical imaging data, wherein the selecting is based on the determined scope of analysis.

The computing device 200 further comprises a generating module 210 configured for generating the at least one selected spectral map.

The computing device 200 still further comprises a processing module 212 configured for processing the received raw multispectral medical imaging data for generating at least one medical image based on the at least one generated spectral map. In an alternative embodiment, the at least one medical image may be generated by the processing module 212 by processing the generated at least one spectral map.

The generating of the at least one medical image based on the at least one generated spectral map may be performed by a medical image generating module 214. Alternatively or in addition, the medical image generating module 214 may be a sub-module of the processing module 212.

Optionally, the computing device 200 may comprise a spectral range determining module 204-A, which is configured for determining a spectral range, a body part and/or a Rol, of the received raw multispectral medical imaging data. Optionally, the determining may be based on metadata of the received raw multispectral medical imaging data, e.g. comprised in a DICOM header. Alternatively or in addition, the determining may be based on voxel data, or pixel data, of the received raw multispectral medical imaging data. The determining may in particular be based on a machine-learned function.

Alternatively or in addition, the computing device 200 may comprise a first user input reception interface 204-B configured for receiving a user input indicative of a spectral range, a body part, and/or a Rol, of the received raw multispectral medical imaging data.

The computing device 200 may comprise a processing tools providing module 211-A configured for providing a list of one or more processing (and/or pre-processing, and/or post-processing) tools.

Alternatively or in addition, the computing device 200 may comprise a second user input reception interface 211-B configured for receiving a user input indicative of a selection of one or more processing (and/or pre-processing, and/or post-processing) tools.

The computing device 200 may comprise a medical image provision interface 216 configured for providing the generated at least one medical image for rendering.

The computing device 200 may comprise a third user input reception interface 218 configured for receiving a user input indicative of a request to modify the rendering.

The computing device 200 may comprise a rendering parameter changing module 220 configured for changing the at least one rendering parameter based on the received user input.

The medical image provision interface 216 may be further configured for providing the at least one medical image with at least one rendering parameter that has been changed for further rendering.

The computing device 200 may comprise an input-output interface 224. The raw multispectral medical imaging data reception interface 202, the optional first user input reception interface 204-B, the optional second user input reception interface 211-B, the optional medical image provision interface 216, and/or the optional third user input reception interface 218 may be embodied by the input-output interface 224.

The computing device 200 may comprise a processor 226. The optional spectral range determining module 204-A, the determination module 206, the selection module 208, the generating module 210, the optional processing tools providing module 211-A, the processing module 212, the optional medical image generating module (or sub-module) 214, and/or the optional rendering parameter changing module 220 may be embodied by the processor 226.

The computing device 200 may comprise a memory 228. Within the memory 228, program elements may be stored for performing the steps of the method 100.

The computing device 200 may be configured for performing the method 100.

A system may comprise the computing device 200 and at least one medical scanner, which is configured for acquiring raw multispectral medical imaging data. The system may further comprise a display device, which is configured for rendering the generated at least one medical image. The system may be configured to perform the method 100.

The inventive technique (e.g., comprising the method 100, the computing device 200, and/or the system) may, according to a first embodiment, comprise a first step S102 of receiving a raw multispectral CT data set. Optionally, spectral ranges and one or more body parts depicted (also: imaged) may be determined from a DICOM header file (briefly: DICOM header), and/or directly from pixel data (e.g., by applying a machine-learned function).

A reason for the exam (and/or the reason for the acquisition of the raw multispectral medical imaging data) may be determined according to the step S106. This may comprise querying relevant data from a worklist, a scheduling system, and/or an EMR database and, optionally, using the spectral ranges or body part known for the CT data set. The data may comprise additional data relating to the patient, such a demographic data and/or the disease history. The step S106 may be performed by an LLM. Alternatively or in addition, one or more anatomy-aware algorithms may be used to determine the body part and/or more specific region (e.g., the at least one Rol) of the anatomic structure.

A pixel-based Rol can be more exact than data retrieved from meta data of the medical imaging data or from EMR database and/or EHR data sources. Data available in the selected and used CT protocol for the scan can convey further reason or patterns for the category of scan.

Further, this process (in particular the determining of the reason for the exam and/or the scope of analysis) may apply beforehand (e.g., as a prep step) potentially before any user interaction. Therefore, gaining speed by trying to predict what medical images will be most useful, and preparing the predicted medical images in advance, ready to be shown, can improve a medical (e.g., diagnostic and/or therapeutic) workflow.

One or more spectral maps are selected according to the reason for the exam in the step S108. This may also comprise selecting a combination of (e.g., two or more) spectral maps.

The raw multispectral CT data are processed in the step S112 so as to generate S114 images respectively according to the selected S108 spectral maps.

A visualization may be generated based on the images. This may include generating combination images with one part based on a first spectral map and another part based on a second map. This may involve applying a segmentation tool to one image (e.g., representing the first map) to obtain segmented image data and use the segmented image data when generating the visualization of another image (e.g., representing the second map). The segmentation may be selected based on the reason for the exam (and/or based on the scope of analysis). Visualization may comprise cinematic rendering.

A mapping from the information collected in the processing step S112 to a predefined configurable set of spectral maps and rendering options may be used (such as for automatically generating the most likely visualizations).

Multiple representations may be shown interactively at once. In a first embodiment, multiple representations may be shown when hovering over some region (e.g., Rol) and/or pixel, enabling this view ad-hoc, e.g., on shortcut or in a lens-like tool. In a second embodiment, scrolling and/or performing a VR (also: VRT) Rotation, and/or showing measurements may be enabled through all representations. In a third embodiment, one or flips in 3D (e.g., on Apple and/or Windows operating systems) are enabled for showing multiple representations at once. In a fourth embodiment, one or more3D orthogonal cut planes are sued, each showing a different representation. In a fifth embodiment, a3D visualization with split plane (e.g., like 3d neuro) showing different representations on each half-space is used. All of the above embodiments may be combined with each other.

Optionally, one or more image processing (and/or pre-processing, and/or post-processing) tools may be selected and applied for each (e.g., to be) generated medical image (e.g., in the step S112). Processing (and/or pre-processing, and/or post-processing) tools may generally be configured to detect medical findings in the medical imaging data. Image processing (and/or pre-processing, and/or post-processing) tools may be specific for (or to) a certain spectral map and/or may work best for a certain spectral map. Therefore, the step of selecting and applying one or more processing (and/or pre-processing, and/or post-processing) tools may also include the feeding of the most appropriate spectral map to the selected tool (e.g., rule-based and/or with a machine-learned function).

Optionally, a hanging protocol and/or one or more reporting templates may be determined (e.g., in the step S116) based on the spectral maps selected (e.g., in the step S108).

Optionally, longitudinal data may be used. Prior image data may be registered with the multispectral CT-data set for follow-up reading. The different spectral maps may be inherently registered. This enables to separately using them for registering with a prior study (which, e.g., need not be, or may be not, multispectral, or no CT dataset at all). Specifically, different representations may be used for registration with the prior data and the best (e.g., with the lowest uncertainty) for the final registration of the multispectral CT-data with the prior image data. Alternatively or in addition, the individual registrations may be aggregated in an optimization process.

According to a second embodiment, a raw multispectral CT data set is received in the step S102. Optionally, spectral ranges and one or more body parts depicted (and/or imaged) are determined from a DICOM header file (and/or DICOM header) and/or directly from pixel data (e.g., by applying a machine-learned function).

An image processing task is received from the user (e.g., a radiologist or other medical practitioner). Receiving the image processing task may comprise a command such as "show me the liver and liver lesions". The command may be implicitly input (e.g., by opening a liver case) and/or explicitly input, such as by activating a tool and/or inputting natural language.

One or more spectral maps may be selected (e.g., In the step S108) according to the task. This selection S108 can be done rule-based (e.g., "liver analysis => iodine map and low kV image"), and/or using more elaborated learned functions.

One or more spectral images may be generated S114 according to the selected S108 spectral maps.

One or more image processing tools may be selected (e.g., for the processing step S112) based on the task and the spectral maps and/or images.

The image processing (and/or pre-processing, and/or post-processing) tools may be applied (e.g., in the processing step S112) to the one or more medical images, and/or may be suggested for use to a clinical user (e.g., by displaying only this tool selection in a tool menu).

Different (e.g., pre-processing, processing, and/or post-processing) tools may be applied to different (in particular raw multispectral) medical imaging data, and/or to different medical images (in particular to be generated). Generally, a combination of (e.g., pre-processing, processing, and/or post-processing) tools may be required to successfully complete a task. For instance, a segmentation mask may be defined in (or for) a medical image, the spectrum of which is best suited to do so, and the segmentation mask may be transferred to another medical image, the spectrum of which is best suited to determine lesions within the mask.

The task may be completed based on the image processing (and/or pre-processing, and/or post-processing) results.

Independent of the grammatical term usage, individuals (e.g., patients and/or humans) with male, female or other gender identities are included within the term.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

## Claims

1. Computer-implemented method (100), performed by a computing device (200), for generating a medical image from a spectral map generated from raw multispectral medical imaging data acquired by means of an energy-resolved medical imaging technique, comprising the method steps of:
- Receiving (S102) raw multispectral medical imaging data, which were acquired by means of an energy-resolved medical imaging technique;
- Determining (S106) a scope of analysis of the received (S102) raw multispectral medical imaging data;
- Selecting (S108) at least one spectral map, wherein the selecting (S108) is based on the determined (S106) scope of analysis;
- Processing (S112) the received (S102) raw multispectral medical imaging data for generating (S114) at least one medical image based on the at least one (S110) spectral map.

2. Method (100) according to claim 1, wherein the energy-resolved medical imaging technique is selected from the group consisting of:
- computed tomography, CT, in particular photon-counting CT;
- magnetic resonance tomography, MRT;
- photoacoustic medical imaging;
- dual-energy digital X-ray imaging;
- photon-counting X-ray imaging; and
- energy-resolved neutron imaging.

3. Method (100) according to any one of the preceding claims, further comprising at least one of the steps of:
- Determining (S104-A) a spectral range, a body part and/or a region of interest, Rol, of the received (S102) raw multispectral medical imaging data, optionally
∘ wherein the determining (S104-A) is based on metadata of the received (S102) raw multispectral medical imaging data, and/or optionally
∘ wherein the determining (S104-A) is based on voxel data, or pixel data, of the received (S102) raw multispectral medical imaging data, wherein the determining (S104-A) is in particular based on a machine-learned function;
- Receiving (S104-B) a user input indicative of a spectral range, a body part, and/or a Rol, of the received (S102) raw multispectral medical imaging data.

4. Method (100) according to any one of the preceding claims, wherein determining (S106) the scope of analysis comprises:
- analysing metadata in relation to the raw multispectral medical imaging data, in particular from a worklist, from a scheduling system, from a scan protocol, from an electronic medical record, EMR, database, from demographic data and/or in relation to a disease history;
- using the determined (S104-A) and/or received (S104-B) spectral range, body part, and/or Rol; and/or
- executing a large language model, LLM, in particular on metadata of the raw multispectral medical imaging data.

5. Method (100) according to any one of the preceding claims, further comprising the step of:
- Providing (S116) the generated (S114) at least one medical image for rendering.

6. Method (100) according to claim 5, wherein the rendering comprises:
- providing a plurality of different rendering functions for rendering the at least one medical image,
- selecting at least one rendering function from the plurality of different rendering functions based on the selected spectral map,
- applying the selected at least one rendering function to the raw multispectral medical imaging data and/or or the spectral map for generating the at least one medica image..

7. Method according to claim 6, wherein
- the step of selecting the at least one spectral map comprises selecting a first spectral map and a second spectral map different from the first spectral map,
- the step selecting at least one rendering function comprises selecting a first rendering function and a second rendering function different from the first rendering function,
- the step of applying the at least one rendering function comprises applying the first and the second rendering function to the raw multispectral medical imaging data and/or or the spectral map for generating the at least one medica image.

8. Method (100) according to any one of claims 5 to 7, wherein providing (S116) the medical image for rendering comprises determining a hanging protocol based on the selected spectral map.

9. Method (100) according to any one of the preceding claims, wherein selecting (S108) the at least one spectral map:
- is based on a predefined configurable set of spectral maps;
- is rule-based and/or based on a learned function;
- comprises selecting two or more spectral maps, and wherein processing (S112) the at least one medical image comprises generating a combination of the two or more spectral maps, and/or wherein processing (S112) the at least one medical image, for example comprising a combination image, is based on a combination of the two or more spectral maps; and/or
- comprises performing a segmentation on at least one of the at least one selected (S108) spectral map.

10. Method (100) according to any one of the preceding claims, wherein the rendering (S116) is based on selecting at least one rendering parameter from a predefined configurable set of rendering parameters, optionally
wherein the selecting of the at least one rendering parameter is based on the determined (S106) scope of analysis.

11. Method (100) according to any one of the preceding claims, wherein the processing (S112) comprises selecting one or more, in particular pre-processing, processing, and/or post-processing, tools from a predetermined set of, in particular pre-processing, processing and/or post-processing, tools based on the selected spectral map.

12. Method according to any one of the preceding claims, wherein
- the scope of analysis comprises determining a first predefined measurement parameter and a predefined second measurement parameter different from the first predefined measurement parameter,
- the step of selecting (S108) the at least one spectral map comprises selecting a first spectral map and a second spectral map different from the first spectral map,
- the method further comprises determining the first predefined measurement parameter based on the first spectral map and determining the second predefined measurement parameter based on the second spectral map.

13. Method (100) according to any one of the preceding claims, further comprising at least one of the steps of:
- Providing (S111-A) a list of one or more, in particular pre-processing, processing, and/or post-processing, tools; and
- Receiving (S111-B) a user input indicative of a selection of one or more, in particular pre-processing, processing, and/or post-processing, tools.

14. Method (100) according to any one of the preceding claims, further comprising the step of receiving prior image data;
wherein the step of selecting comprises selecting at the least one spectral map based on the prior image data.

15. Computing device (200) for generating a medical image from a spectral map generated from raw multispectral medical imaging data acquired by means of an energy-resolved medical imaging technique, the computing device (200) comprising:
- a raw multispectral medical imaging data reception interface (202) configured for receiving raw multispectral medical imaging data, which were acquired by means of an energy-resolved medical imaging technique;
- a determination module (206) configured for determining a scope of analysis of the received raw multispectral medical imaging data;
- a selection module (208) configured for selecting at least one spectral map, wherein the selecting is based on the determined scope of analysis;
- a processing module (212) configured for processing the received raw multispectral medical imaging data for generating at least one medical image based on the at least one generated spectral map.

16. Computing device (200) according to the directly preceding claim, further configured to perform any one of the steps, and/or comprise any one of the features, of any one of the method claims 2 to 14.

17. System for generating a medical image from a spectral map generated from raw multispectral medical imaging data acquired by means of an energy-resolved medical imaging technique, the system comprising:
- at least one medical scanner, which is configured for acquiring raw multispectral medical imaging data;
- a computing device (200) according to claim 15 or 16, wherein the raw multispectral medical imaging data reception interface (202) is configured for receiving the raw multispectral medical imaging data from the at least one medical scanner; and
- a display device, which is configured for rendering the generated at least one medical image.
